# EUROPÄISCHE PATENTSCHRIFT

(11) **EP 2 695 862 B1**
(45) Veröffentlichungstag und Bekanntmachung des Hinweises auf die Patenterteilung: **21.10.2015**
(21) Anmeldenummer: 13176968.9
(22) Anmeldetag: 18.07.2013
(51) Int. Cl.: C03B 23/055, C03B 23/045, C03B 23/049

(54) **VERFAHREN UND VORRICHTUNG ZUM UMFORMEN EINES LÄNGLICHEN GLASKÖRPERS SOWIE VERWENDUNG HIERVON**
METHOD AND DEVICE FOR FORMING A LONG GLASS BODY AS WELL AS THE USE THEREOF
PROCÉDÉ ET DISPOSITIF DE DÉFORMATION D'UN CORPS DE VERRE LONGITUDINAL ET UTILISATION DE CELUI-CI

(30) Priorität: 09.08.2012 DE 102012107338
(43) Veröffentlichungstag der Anmeldung: 12.02.2014
(73) Patentinhaber: Schott AG, 55122 Mainz (DE)
(72) Erfinder: Bartsch, Reiner, 95643 Tirschenreuth (DE); Biersack, Ralf, 95173 Schönwald (DE); Pulz, Wolfgang, 95666 Mitterteich (DE); Debreczeny, Csaba, 92637 Weiden (DE)
(74) Vertreter: 2K Patentanwälte Blasberg Kewitz & Reichel

(56) Entgegenhaltungen:
- DE-B3-102006 015 223
- JP-A- H03 115 131
- JP-A- 2006 315 919
- JP-U- S5 947 629
- US-A- 4 106 847

## Beschreibung

### GEBIET DER ERFINDUNG

Die vorliegende Erfindung betrifft allgemein die Herstellung von länglichen Glaskörpern unter Umformung eines Glaskörpers mit einem Ausgangsprofil in einem heißen, plastisch verformbaren Zustand zu einem Glaskörper mit einem davon abweichenden anderen Profil. Insbesondere betrifft die vorliegende Erfindung die Herstellung von Glasrohren mit einem von der Kreisform abweichenden Profil mit hoher Präzision, beispielsweise als Ovalrohr oder plan-konvexer Glaskörper zur optischen Abbildung.

### HINTERGRUND DER ERFINDUNG

Als Ausgangsmaterial für derartige Glaskörper werden üblicherweise Glasrohre oder auch Glasstangen mit einem kreisrunden Profil verwendet, die dann in einem heißen, plastisch verformbaren Zustand zu dem gewünschten Profil umgeformt werden.

DE 545449 A offenbart eine Vorrichtung zum Umformen von Glasrohren zu Glasrohren mit einem nicht-kreisrunden Profil, wobei die Glasrohre im erhitzten Zustand durch einen Walzenspalt gefördert werden. Eine Verstellung der den Walzenspalt ausbildenden Quetschwalzen während der Umformung wird jedoch nicht offenbart. DE 1007962 A offenbart ein entsprechendes Verfahren zum Umformen von Glasrohren zu dünnen Isolierbändern oder Isolierschichten.

JP 2006315919 A offenbart eine Vorrichtung zum Umformen von Glasrohren zu Glasrohren mit einem nicht-kreisrunden Profil. Die Positionen der den Walzenspalt ausbildenden Quetschwalzen können zum Einstellen des Profils des Glasrohrs nach der Umformung verstellt werden. Eine Verstellung der den Walzenspalt ausbildenden Quetschwalzen während der Umformung wird jedoch nicht offenbart.

Um ein vorbestimmtes Profil durch Umformung von Glasrohren zu erzielen, schlägt DE 19856892 A1 vor, den Durchmesser und die Wandstärke des Glasrohrs nach der Umformung kontinuierlich zu messen und einen an einen Rohrinnenraum anzulegenden Überdruck geeignet zu steuern oder zu regeln. Eine Verstellung der den Walzenspalt ausbildenden Quetschwalzen während der Umformung wird jedoch nicht offenbart.

DE 102006015223 B3 der Anmelderin offenbart ein Verfahren und eine Vorrichtung gemäß dem Oberbegriff von Patentanspruch 9 zum Herstellen eines Glasrohrs mit einem von der Kreisform abweichenden Profil. Dabei durchläuft das Ausgangsglasrohr mit dem Ausgangsprofil (Preform) zunächst eine Heißzone unter Ausbildung einer Ziehzwiebel und anschließend einen von einem Walzenpaar ausgebildeten Walzenspalt, in welchem die Ziehzwiebel zu einem Glasrohr mit einem anderen Profil umgeformt wird. Bei diesem Umformungsvorgang handelt es sich um ein Wiederziehen des Ausgangsglasrohrs. Während des Wiederziehens können die Positionen der den Walzenspalt bildenden Quetschwalzen in Glasrohrabzugsrichtung und/oder in Richtung senkrecht dazu verstellt werden. Diese Verstellung der Positionen der Quetschwalzen erfolgt zu dem Zweck, ein konstantes Profil des Glasrohrs nach der Umformung zu erzielen. Hierzu kann das Profil des Glasrohrs nach der Umformung auch vermessen und hierauf gesteuert oder geregelt werden. Die Verstellung der Positionen der Quetschwalzen erfolgt jedoch nicht permanent im Sinne der vorliegenden Anmeldung, wie nachfolgend offenbart. Diese Verstellung erfolgt jedoch nicht so, dass ständig ein Kontaktbereich bzw. eine Kontaktfläche zwischen der jeweiligen Quetschwalze und dem heißen Glasrohr in dem Umformungsbereich variiert wird.

Selbst wenn das Ausgangsglasrohr mit hoher Präzision hergestellt wird, führen die allgemeinen Bedingungen bei der Umformung und deren Fluktuationen zu einer Präzision, die für Anwendungen mit hoher geometrischer Genauigkeit nicht zufriedenstellend sind.

### ZUSAMMENFASSUNG DER ERFINDUNG

Aufgabe der vorliegenden Erfindung ist es, ein verbessertes Verfahren sowie eine verbesserte Vorrichtung zur Umformung von Ausgangsglasrohren oder Ausgangsglasstäben zu Glasrohren oder Glasstäben mit einem vorbestimmten anderen Profil mit noch höherer Genauigkeit bereitzustellen. Gemäß einem weiteren Gesichtspunkt der vorliegenden Erfindung sollen ferner ein verbessertes Verfahren sowie eine verbesserte Vorrichtung zur Herstellung solcher Glasrohre oder Glasstäbe bereitgestellt werden.

Diese Aufgaben werden durch ein Verfahren nach Anspruch 1 bzw. 8 sowie durch eine Vorrichtung nach Anspruch 9 bzw. 13 gelöst. Weitere vorteilhafte Ausführungsformen sind Gegenstand der rückbezogenen Unteransprüche.

Bei einem Verfahren zum Umformen eines länglichen Glaskörpers in Form eines Glasrohrs oder Glasstabs mit einem Ausgangsprofil zu einem länglichen Glaskörper mit einem anderen Profil durchläuft der längliche Glaskörper in einem heißen, plastisch verformbaren Zustand einen Walzenspalt, der von Quetschwalzen ausgebildet wird und eine Spaltbreite aufweist, die kleiner ist als eine Außenabmessung des Ausgangsprofils. Beim Durchlaufen des schmäleren Walzenspalts wird so das Glasrohr bzw. der Glasstab zu einem Glasrohr bzw. Glasstab mit dem gewünschten Profil umgeformt. Die Spaltbreite des Walzenspalts wird dabei präzise vorgegeben und aufrechterhalten, um die gewünschte Genauigkeit in der kleinen Achse zu erreichen. Die durch Glasmengenschwankungen und dergleichen hervorgerufenen Schwankungen vor der Umformung werden dabei an den (häufig nicht so wichtigen) großen (ungequetschten) Außendurchmesser des Glasrohrs bzw. Glasstabs "weitergegeben". In der Erstreckungsrichtung des Walzenspalts können die Dimensionen somit sehr präzise vorgegeben werden.

Erfindungsgemäß wird die Lage von zumindest einer der Quetschwalzen durch permanentes axiales Verstellen der jeweiligen Quetschwalze entsprechend einer vorbestimmten, stetig ausgeführten Bewegungsfunktion so verändert, dass eine Kontaktfläche zwischen der jeweiligen Quetschwalze und dem heißen Glaskörper permanent variiert wird bzw. sich ändert, wobei die vorbestimmte Bewegungsfunktion eine zyklische Hin- und Herbewegung der jeweiligen Quetschwalze in deren axialer Richtung ist. Durch diese überraschend einfache Maßnahme können erfindungsgemäß Glaskörper mit noch höherer Präzision hergestellt werden. Denn die Kontaktfläche zwischen dem heißen Glas und den Quetschwalzen ändert sich erfindungsgemäß ständig. Dadurch werden diverse Probleme gegenüber herkömmlichen Quetschböcken mit einer (quasi-)fixen Position des Quetschwalzen verhindert. Quasi-fix bedeutet in diesem Zusammenhang insbesondere, dass die Kontaktposition der Walzen mit dem heißen Glas nicht veränderlich ist. Verletzungen in der Glasoberfläche durch zu heiße Walzen, kleine Glaspartikel oder dergleichen können aus der Oberfläche des Glaskörpers beim Quetschen herausgerissen werden und stören somit die weitere Umformung nicht weiter. Unterschiedliche Temperaturen auf der Oberfläche der Quetschwalzen, die herkömmlich zu unterschiedlichen Spaltmaßen führen und somit zu schlechten Toleranzen aufgrund einer Veränderung der Kontaktfläche führten, können so ebenfalls verringert werden. Ferner kann eine unerwünschte Überhitzung der Kontaktfläche zwischen Glaskörper und Quetschwalzen vermieden werden, die herkömmlich häufig zu deutlich sichtbaren unerwünschten "Hitzespuren" auf der Außenoberfläche des Glaskörpers geführt hatten. Die Quetschwalzen können bei dem erfindungsgemäßen Verfahren auch länger verwendet werden, insbesondere ist ein maschinelles Polieren der Quetschwalzen vor deren Wiederverwendung erfindungsgemäß, wenn überhaupt, dann jedenfalls wesentlich seltener erforderlich. Mit dem erfindungsgemäßen Verfahren lässt sich auch eine ruhigere und gleichmäßigere Außenoberfläche des Glaskörpers erzielen.

Auf Grund der permanenten, kontinuierlichen Verstellung können die Quetschwalzen grundsätzlich auch ohne Kühlung betrieben werden, was bei einem herkömmlichen Verfahren häufig zu zusätzlichen Problemen mit der Maßhaltigkeit des gequetschten Glaskörpers geführt hatte.

Bevorzugt wird der Walzenspalt von zwei einander gegenüberliegenden Quetschwalzen ausgebildet, die parallel zueinander verlaufend verschieblich gelagert sind. Wenngleich es grundsätzlich ausreichend sein kann, wenn die Lage von nur einer dieser beiden Quetschwalzen permanent (axial) verstellt wird, wird erfindungsgemäß bevorzugt die Lage von beiden Quetschwalzen permanent in Ihrer Lage (axial) verstellt werden. Bevorzugt werden diese beiden Quetschwalzen gemeinsam und synchron zueinander axial verstellt.

Um die vorgenannte permanente Verstellung der jeweiligen Quetschwalze zu erzielen, ist der jeweiligen Quetschwalze eine Verstelleinrichtung oder Antrieb zugeordnet, der mit der jeweiligen Quetschwalze gekoppelt ist und diese so verstellt, dass eine Kontaktfläche zwischen der jeweiligen Quetschwalze und dem heißen Glaskörper permanent variiert wird bzw. sich ändert.

Gemäß einer weiteren Ausführungsform kann die vorgenannte permanente Verstellung der jeweiligen Quetschwalze unter Beibehaltung der aktuellen Spaltbreite zwischen den den Walzenspalt ausbildenden Quetschwalzen erfolgen. Dies soll nicht ausschließen, dass ergänzend auch die Breite des Walzenspalts zwischen den diesen ausbildenden Quetschwalzen gesteuert oder geregelt wird, beispielsweise um eine konstante Außenabmessung des Glaskörpers oder eine konstante Wandstärke desselben zu erzielen. Die Verstellung der jeweiligen Quetschwalze und eine solche Steuerung oder Regelung der Breite des Walzenspalts sind jedoch bevorzugt nicht miteinander gekoppelt und erfolgen zu einem völlig anderen Zweck. Dies kann sich beispielsweise auch in deutlich unterschiedlichen Zeitskalen ausdrücken, auf denen die permanente Verstellung der Position der jeweiligen Quetschwalze und die Steuerung oder Regelung der Breite des Walzenspalts erfolgen.

Die vorbestimmte Bewegungsfunktion, entsprechend der die Lage der zumindest einen Quetschwalze bzw. bevorzugt der beiden Quetschwalzen permanentes axiales Verstellen der jeweiligen Quetschwalze verändert wird, wird zweckmäßig überwiegend stetig ausgeführt und kann beispielsweise entsprechend einem Sägezahn- oder Sinussignal ausgeführt werden, wobei darauf zu achten ist, dass ein allzu langes Verharren der Quetschwalze(n) an der gleichen Position zu vermeiden ist, weil dann die Nachteile von herkömmlichen Umformverfahren wieder auftreten würden. Dabei ist die vorbestimmte Bewegungsfunktion als zyklische Hin- und Herbewegung der jeweiligen Quetschwalze oder bevorzugt der beiden den Walzenspalt ausbildenden Quetschwalzen in deren axialer Richtung ausgeführt. Bevorzugt ist diese Hin- und Herbewegung zeitlich symmetrisch.

Gemäß einer weiteren Ausführungsform wird die Bewegungsfunktion in diskreten Schritten gleicher Schrittgröße ausgeführt, was die Umsetzung der Bewegungsfunktion mittels handelsüblicher Synchronmotoren oder Schrittmotoren oder dergleichen begünstigt.

Gemäß einer weiteren Ausführungsform wird eine Drehbewegung der den Walzenspalt ausbildenden Quetschwalzen jeweils separat angetrieben. Dies ermöglicht eine hochgenaue Einstellung des Profils des Glaskörpers nach der Umformung, beispielsweise der ovalen Form eines herzustellenden Ovalrohrs. Die Quetschwalzen werden dabei bevorzugt auf die Geschwindigkeit synchronisiert, mit der der Glaskörper den Walzenspalt durchläuft.

Gemäß einer weiteren Ausführungsform wird die Drehbewegung der den Walzenspalt ausbildenden Quetschwalzen jeweils synchron oder mit einem vorbestimmten konstanten Offset angetrieben, sodass man die Ziehgeschwindigkeit des Glaskörpers durch den Walzenspalt ändern und die Geschwindigkeit der Quetschwalzen automatisch mit ändern kann.

Gemäß einer weiteren Ausführungsform wird eine Außenabmessung und/oder Innenabmessung des anderen Profils stromabwärts des Walzenspalts erfasst und ein die Umformung des heißen, plastisch verformbaren Glaskörpers zu einem Glaskörper mit dem anderen Profil betreffender Parameter in Entsprechung zu der erfassten Außenabmessung und/oder Innenabmessung des anderen Profils gesteuert oder geregelt, um die Außenabmessung und/oder Innenabmessung des anderen Profils konstant zu halten.

Hierzu kann beispielsweise der Außendurchmesser und/oder der Innendurchmesser mittels eines optischen Messverfahrens, das stromabwärts von dem Walzenspalt und zweckmäßig noch vor einer Ziehmaschine ausgeführt wird, die den Glaskörper durch den Walzenspalt abzieht, permanent gemessen und überwacht werden. Im Falle einer unerwünschten Änderung kann dann der relevante Parameter nachgesteuert oder -geregelt werden, um eine noch höhere Präzision zu erzielen.

Gemäß einer weiteren Ausführungsform werden die den Walzenspalt ausbildenden Quetschwalzen automatisch vermessen, insbesondere deren Rundlaufgenauigkeit und/oder Außendurchmesser, und diese mittels einer Regelung so zueinander positioniert, dass die Rundlauffehler und/oder Außendurchmesservariation, bezogen auf den Spaltabstand ein Minimum ergeben.

Gemäß einer weiteren Ausführungsform ist der Parameter die Spaltbreite des Walzenspalts, eine jeweilige Drehzahl oder Drehzahldifferenz der den Walzenspalt ausbildenden Quetschwalzen oder ein an einen Innenraum des als Glasrohr ausgebildeten plastisch verformbaren Glaskörpers angelegter Überdruck.

Gemäß einer weiteren Ausführungsform wird der Glaskörper entsprechend der stromabwärts des Walzenspalts erfassten Außenabmessung und/oder Innenabmessung markiert und/oder sortiert. Somit können Chargen mit vorbestimmten Toleranzen einfacher erstellt werden.

Ein weiterer Gesichtspunkt der vorliegenden Erfindung betrifft ein Verfahren zum Herstellen eines länglichen Glaskörpers in Form eines Glasrohrs oder Glasstabs, bei welchem Verfahren der längliche Glaskörper aus einer Glasschmelze zu einem Glasrohr oder Glasstab mit einem Ausgangsprofil abgezogen wird und das Glasrohr oder der Glasstab mittels eines Verfahrens, wie vorstehend ausgeführt, in einem heißen, plastisch verformbaren Zustand zu einem Glasrohr oder Glasstab mit einem anderen Profil umgeformt wird.

Um die vorgenannte permanente axiale Verstellung der Quetschwalzen zu erzielen, ist den Quetschwalzen und bevorzugt jeder der Quetschwalzen zumindest eine Verstelleinrichtung zugeordnet. Gemäß einer bevorzugten Ausführungsform umfasst die Verstelleinrichtung einen Verschiebetisch und einen Verstellmotor zum Verstellen des Verschiebetisches, wobei die Quetschwalzen auf dem Verschiebetisch gelagert sind, der Verschiebetisch in Axialrichtung der Quetschwalzen verschieblich gelagert ist und der Verstellmotor mit dem Verschiebetisch gekoppelt ist, um das permanente axiale Verstellen der zumindest einen Quetschwalze bzw. der beiden den Walzenspalt ausbildenden Quetschwalzen durch Verschieben des Verschiebetisches zu bewirken.

Ein weiterer Gesichtspunkt der vorliegenden Erfindung betrifft eine entsprechend ausgelegte Vorrichtung zum Umformen eines länglichen Glaskörpers in Form eines Glasrohrs oder Glasstabs mit einem Ausgangsprofil in einen länglichen Glaskörper mit einem anderen Profil, wie nach dem Patentanspruch 9 beansprucht.

Gemäß einer weiteren Ausführungsform kann eine solche Vorrichtung weiterhin umfassen ein Messgerät, das stromabwärts des Walzenspalts angeordnet ist, um eine Außenabmessung und/oder Innenabmessung des anderen Profils stromabwärts des Walzenspalts zu erfassen; und eine Steuer- oder Regelungseinrichtung, die ausgelegt ist, um einen die Umformung des heißen, plastisch verformbaren Glaskörpers zu einem Glaskörper mit dem anderen Profil betreffenden Parameter in Entsprechung zu der erfassten Außenabmessung und/oder Innenabmessung des anderen Profils so zu steuern oder zu regeln, dass die Außenabmessung und/oder Innenabmessung des anderen Profils konstant gehalten ist.

Gemäß einer weiteren Ausführungsform kann bei einer solchen Vorrichtung der Parameter die Spaltbreite des Walzenspalts, eine jeweilige Drehzahl oder Drehzahldifferenz der den Walzenspalt ausbildenden Quetschwalzen oder ein an einen Innenraum des als Glasrohr ausgebildeten plastisch verformbaren Glaskörpers angelegter Überdruck sein.

Gemäß einer weiteren Ausführungsform kann eine solche Vorrichtung weiterhin eine Markierungs- und/oder Sortiereinrichtung umfassen, um den Glaskörper entsprechend der stromabwärts des Walzenspalts erfassten Außenabmessung und/oder Innenabmessung zu markieren und/oder sortieren.

### FIGURENÜBERSICHT

Nachfolgend wird die Erfindung in beispielhafter Weise und unter Bezugnahme auf die beigefügten Zeichnungen beschrieben werden, woraus sich weitere Merkmale, Vorteile und zu lösende Aufgaben ergeben werden. Es zeigen:
- Fig. 1: in einer schematischen Darstellung eine Glasrohrherstellungsanlage gemäß der vorliegenden Erfindung;
- Fig. 2: in einer Vorderansicht eine Vorrichtung zum Umformen gemäß einer ersten Ausführungsform der vorliegenden Erfindung;
- Fig. 3: die Vorrichtung nach der Fig. 2 in einer Seitenansicht;
- Fig. 4a: die Vorrichtung nach der Fig. 2 in einer Draufsicht ohne eine einer Abschirmung des Umformbereichs dienenden Abdeckung;
- Fig. 4b: die Vorrichtung nach der Fig. 2 in einer Draufsicht mit der einer Abschirmung des Umformbereichs dienenden Abdeckung;
- Fig. 5a: in einer perspektivischen Vorderansicht eine Vorrichtung zum Umformen gemäß einer zweiten Ausführungsform der vorliegenden Erfindung ohne einen einer Abschirmung des Umformbereichs dienenden Abdeckung;
- Fig. 5b: in einer perspektivischen Vorderansicht die Vorrichtung nach der Fig. 5a mit dem einer Abschirmung des Umformbereichs dienenden Abdeckung;
- Fig. 6: in einer perspektivischen Draufsicht den oberen Bereich der Vorrichtung nach der Fig. 2 mit den Quetschwalzen; und
- Fig. 7a bis 7c: drei Beispiele für Glasrohre, die mittels einer Vorrichtung nach der vorliegenden Erfindung durch Umformung ausgebildet werden.

In den Figuren bezeichnen identische Bezugszeichen identische oder im Wesentlichen gleichwirkende Elemente oder Elementgruppen.

### AUSFÜHRLICHE BESCHREIBUNG VON BEVORZUGTEN AUSFÜHRUNGSBEISPIELEN

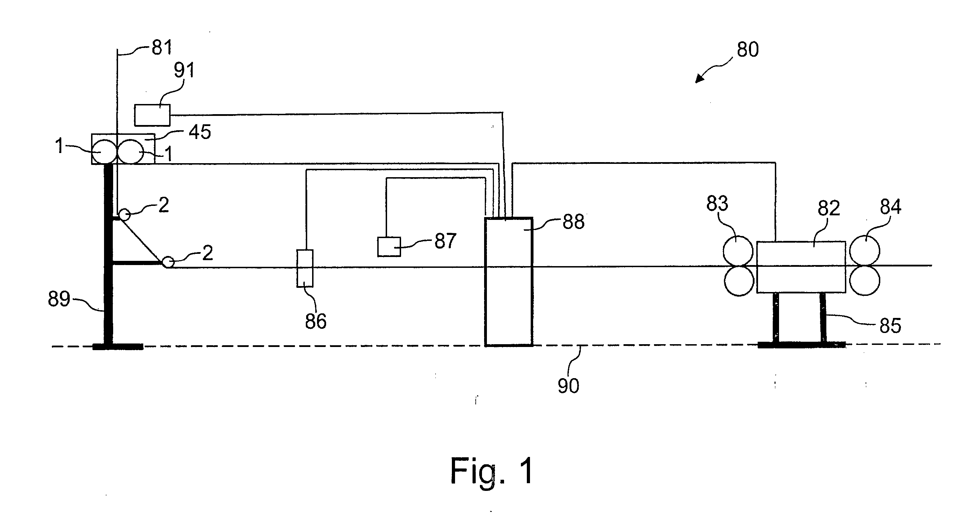

Gemäß der Fig. 1 umfasst die insgesamt mit 80 bezeichnete Anlage ein Gestell 89, an dem zwei Quetschwalzen 1 zum Umformen des in deren Walzenspalt einlaufenden Glasrohrstrangs 81 sowie stromabwärts davon zwei Umlenkrollen 2 gelagert sind, um den umgeformten Glasrohrstrang in Richtung der Ziehmaschine 82 mit den beiden Zugrollenpaaren 83, 84 umzulenken. Ein Gehäusedeckel 45, in welchem die Quetschwalzen 1 angeordnet sind, schirmt den Umformungsbereich im Bereich der Quetschwalzen 1 von der Außenumgebung ab.

Der Außendurchmesser des Glasrohrstrangs 81 wird mit Hilfe eines Messgeräts 86 bevorzugt berührungsfrei und ganz besonders bevorzugt optisch gemessen. Der Innendurchmesser des Glasrohrstrangs 81 wird mit Hilfe eines Messgeräts 87 optisch gemessen, insbesondere mit Hilfe eines Triangulationsverfahrens. Der Messort des Messgeräts 87 befindet sich bevorzugt möglichst nahe an dem Messort des Messgeräts 86. Ferner werden die beiden Quetschwalzen 1 automatisch vermessen, beispielsweise mittels induktiver Wegmessung, und der Rundlauffehler und/oder die Außendurchmesserschwankungen der Quetschwalzen bestimmt.

Wie durch die Verbindungslinien in der Fig. 1 angedeutet, werden die relevanten Komponenten der Anlage 80 von einer Steuerungs- oder Regelungseinrichtung 88 gesteuert oder geregelt, insbesondere von einer CPU basierend auf einer hierzu ausgelegten Software. Damit kann auf einen konstanten Außendurchmesser der Glasrohre bzw. Glasstäbe gesteuert oder geregelt werden, oder auf eine konstante Wandstärke des Glasrohrs oder so, dass der Rundlauffehler der Quetschwalzen 1 bezogen auf die Breite des von diesen ausgebildeten Walzenspalts ein Minimum ergeben.

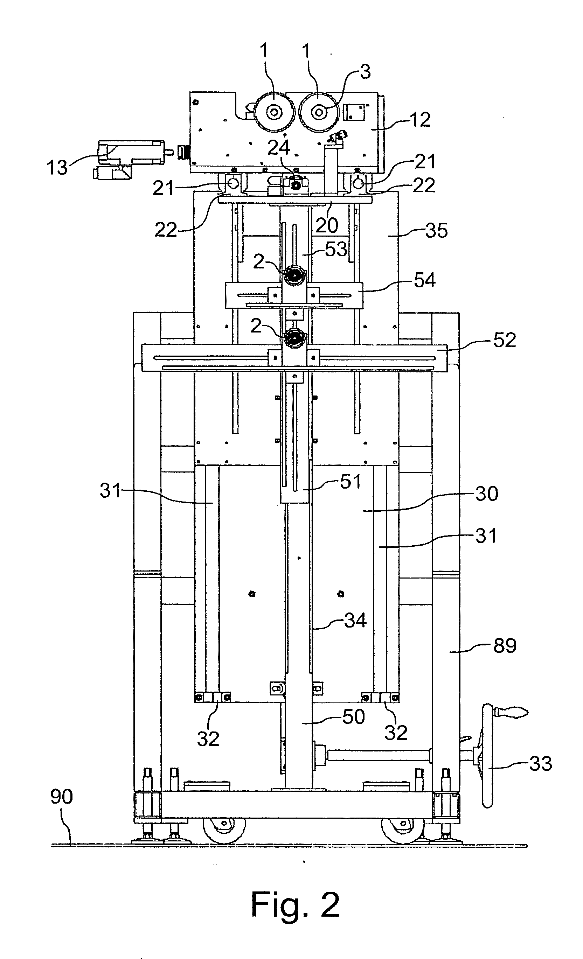

Die Fig. 2 zeigt in einer Vorderansicht eine Vorrichtung zum Umformen gemäß einer ersten Ausführungsform der vorliegenden Erfindung. An einem auf dem Boden 90 abgestützten Maschinengestell 89 ist eine Grundplatte 30 befestigt, an der der Verschiebetisch 35 vertikal verschiebbar gelagert ist, um eine Einstellung der Höhe der Quetschwalzen 1 zu ermöglichen. Diese Höhenverstellung kann manuell mit Hilfe des Handrads 33 erfolgen, aber auch motorisch erfolgen.

An der Grundplatte 30 sind zwei Führungsstangen 31 befestigt, welche den Verschiebetisch vertikal führen. Die Verstellung wird mittels einer Gewindespindel 34 bewerkstelligt, die einerseits in das als Vertikal-Verstelleinrichtung wirkende Handrad 33 und andererseits in den Versehicbetisch 35 eingreift oder damit gekoppelt ist.

Gemäß der Fig. 2 ist die Trägerplatte 20, an welcher die Quetschwalzen (nicht dargestellt) gelagert sind, über einen horizontalen Adapter 38 und einen vertikalen Adapter 37 mit dem Verschiebetisch 35 verbunden. Durch Verstellen des Handrads 33 kann somit die Höhe der Quetschwalzen 1 eingestellt werden. Die Höhe wird dabei so eingestellt, dass entlang des sich in der Abzugsrichtung rasch abkühlenden Glasrohrstrangs ein Temperaturbereich bereitgestellt wird, in welchem der Glasrohrstrang geeignet plastisch ist, um präzise umgeformt werden zu können. Diese Höhe kann einmalig, beispielsweise bei Inbetriebnahme der Anlage, eingestellt werden oder kontinuierlich oder zyklisch mittels der Steuerung oder Regelung 88 nachjustiert werden.

Gemäß der Fig. 2 können die Höhe der Umlenkrollen 2 und deren Stellung in einer Richtung quer zur Abzugsrichtung des Glasrohrstrangs unabhängig voneinander mittels der Höhenverstellungen 51 und 53 sowie mittels der Querverstellungen 52 und 54 präzise eingestellt oder nachjustiert werden.

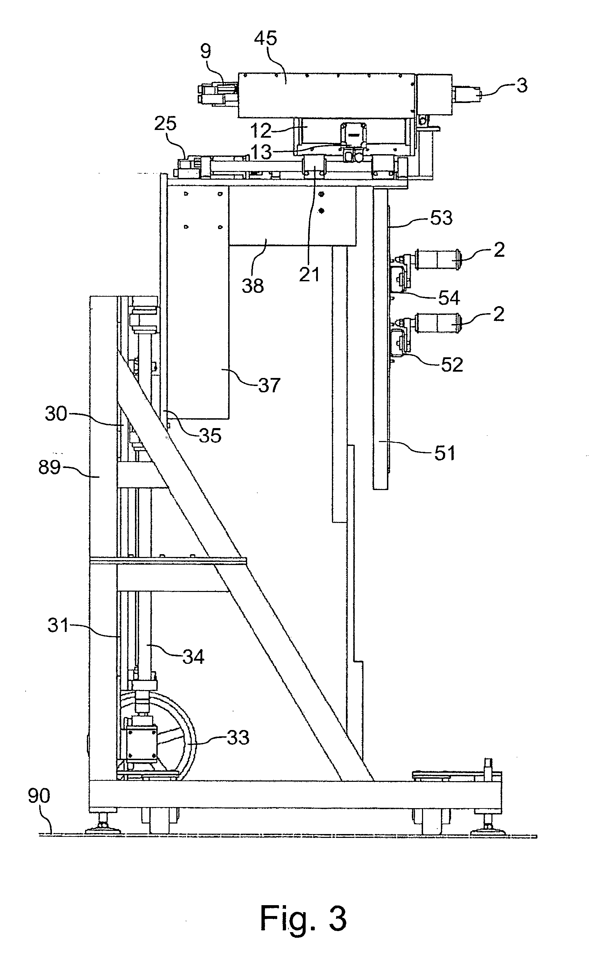

Die Fig. 3 zeigt die Vorrichtung nach der Fig. 2 in einer Seitenansicht.

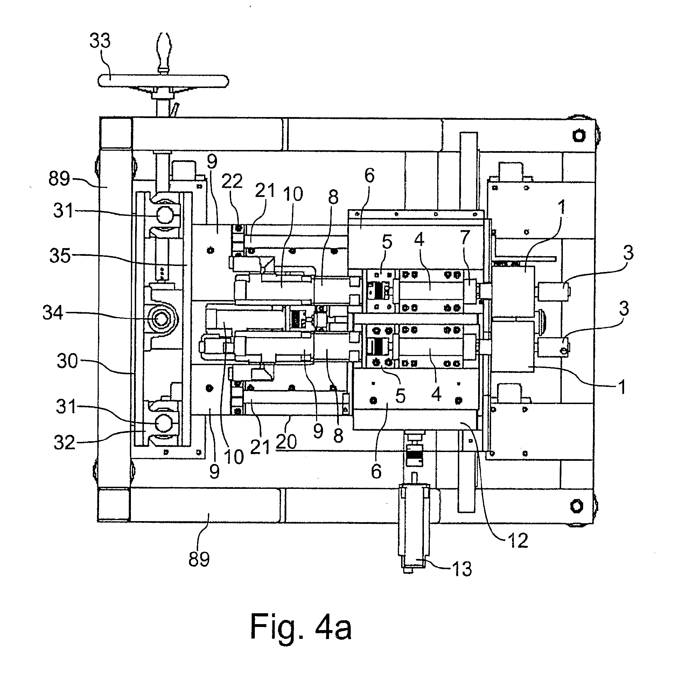

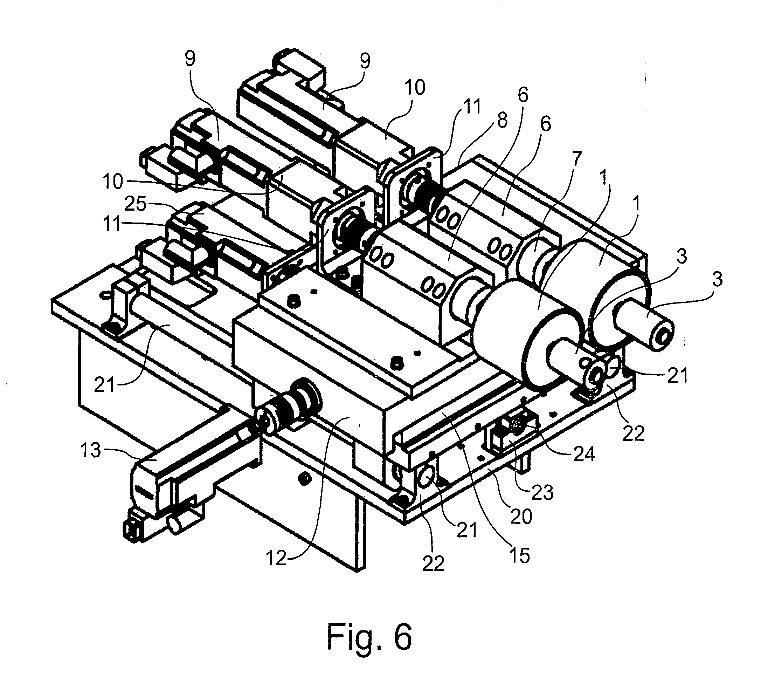

Der weitere Aufbau zur Verstellung der Quetschwalzen 1 ergibt sich am übersichtlichsten aus der Zusammenschau der Draufsicht gemäß der Fig. 4a und der Perspektivansicht gemäß der Fig. 6. Die beiden einen Walzenspalt ausbildenden Quetschwalzen 1 sind an einem Verschiebetisch 12 gelagert, der die beiden Quetschwalzen 1 trägt. Der Verschiebetisch 12 kann mit Hilfe des Verstellmotors 25 in Axialrichtung der Quetschwalzen 1 verstellt werden, um so die beiden Quetschwalzen gemeinsam axial zu verstellen.

Gemäß einer weiteren Ausführungsform (nicht gezeigt) können die beiden einen Walzenspalt ausbildenden Quetschwalzen 1 an einem zweiteilig ausgebildeten Verschiebetisch 12 gelagert sein, dessen eine Hälfte eine der Quetschwalzen 1 trägt und dessen andere Hälfte die andere der beiden Quetschwalzen 1 trägt. Während die eine Hälfte des Verschiebetisches 12 gemäß dieser Ausführungsform während der Umformung ortsfest gehalten wird, kann die andere Hälfte des Verschiebetisches 12 mit Hilfe des Verstellmotors 25 in Axialrichtung der Quetschwalzen 1 relativ zu der ersten Hälfte des Verschiebetisches 12 verstellt werden.

Zur Führung des Verschiebetisches 12 sind an der Trägerplatte 20 zwei zueinander parallele Führungsstangen 21 an jeweiligen Lagerblöcken 22 gelagert. Auf der Unterseite des Verschiebetisches 12 vorgesehene Gleitelemente (nicht dargestellt), welche in die Führungsstangen 21 eingreifen, führen die axiale Verstellung des Verschiebetisches. Zur Verstellung des Verschiebetisches ist weiterhin eine Verstell-Gewindespindel 24 an der Trägerplatte befestigt, die von dem Verstellmotor 25 drehangetrieben wird und in ein Gegengewinde (nicht dargestellt) auf der Unterseite des Verschiebetisches 12 eingreift.

Der Verstellmotor 25 ist dabei als Synchronmotor ausgebildet, kann jedoch auch als Schrittmotor ausgeführt sein, um eine schrittweise axiale Verstellung zu ermöglichen, wie nachfolgend näher ausgeführt.

Gemäß der Fig. 6 ist dem Verschiebetisch 12 ferner eine quer verlaufende Führungsschiene 15 vorgesehen, die die Verstellung des Verschiebetisches (oder gemäß der vorgenannten alternativen Ausführungsform der einen relativ zu der anderen Hälfte des Verschiebetisches 12) bei der Verstellung der Spaltbreite des Walzenspalts führt. Zur Einstellung der Spaltbreite des Walzenspalts ist ein Verstellmotor 13 vorgesehen, der an der Trägerplatte 20 befestigt ist. Dadurch kann die verstellbare Quetschwalze 1 relativ zu der anderen, ortsfest gelagerten Quetschwalze verstellt werden.

Es sei darauf hingewiesen, dass grundsätzlich auch beiden Quetschwalzen 1 axial verstellt werden können.

Zum Antreiben der Drehbewegung der Quetschwalzen 1 sind die beiden Servomotoren 9 vorgesehen, die über ein jeweiliges Getriebe 10 und eine jeweilige Kupplung 8 mit der zugeordneten Quetschwalze 1 gekoppelt sind. Die Kupplung 8 ist in einem Kupplungsgehäuse aufgenommen, deren vorderes flanschartiges Ende 11 von der Kupplung 8 teilweise durchgriffen wird. Die Kupplung 8 koppelt mit einer Spindelwelle 4, die mittels Lagern 5 / Spindellagern 7 in einem jeweiligen als Gehäuse ausgebildeten Lagerblock 6 gelagert ist. Die Quetschwalzen 1 können an Befestigungsflanschen am vorderen Ende der jeweiligen Spindelwelle 4 befestigt sein.

In das vordere Ende der Quetschwalzen 1 greift eine jeweilige Drehdurchführung 3 ein, die mittels Luft oder eines Fluids, wie beispielsweise Wasser, gekühlt werden kann, um die Quetschwalzen weiter abzukühlen. Es sei jedoch darauf hingewiesen, dass aufgrund der erfindungsgemäß permanent ausgeführten axialen Verstellung der Quetschwalzen 1 während der Umformung des Glasrohrs eine solche Kühlung nicht unbedingt notwendig ist.

Es ist möglich, die Drehgeschwindigkeit der beiden Quetschwalzen 1 separat zu steuern. Weiterhin wird diese Drehgeschwindigkeit hochgenau digital erfasst und angezeigt. Das ist vorteilhaft bei der Einstellung der Form des Ovalrohres.

Es ist möglich die Drehgeschwindigkeit der Quetschwalzen 1 mit der Geschwindigkeit der Ziehmaschine 82 (vgl. Fig. 1) am Zug zu synchronisieren bzw. mit einem festen Offset aneinander zu koppeln. Das heißt, man kann die Ziehgeschwindigkeit des Zuges ändern und die Geschwindigkeit der Quetschwalzen wird automatisch mit geändert.

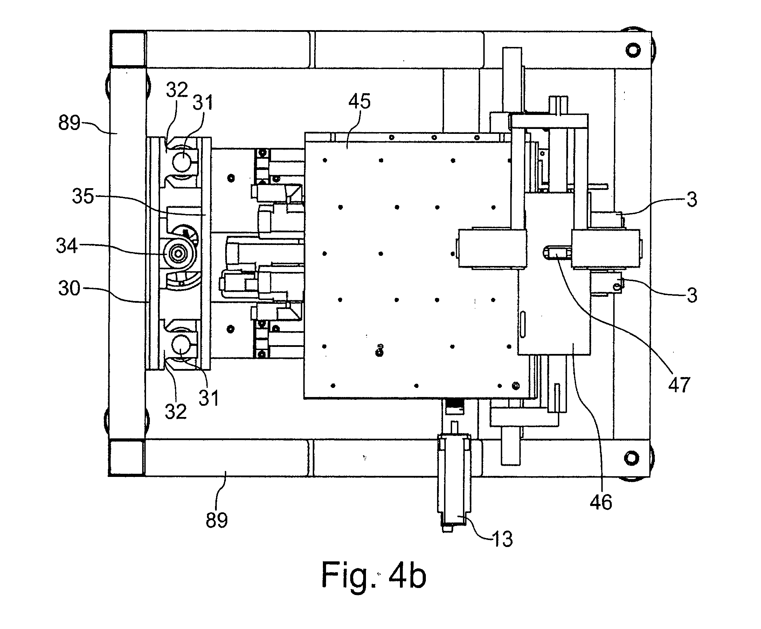

Wie man in der Fig. 4b erkennen kann, sind die Quetschwalzen im Betriebszustand gemeinsam in einem Gehäuse 45 untergebracht und von einer weiteren Abdeckung 46 abgedeckt, in welcher eine Öffnung 47 ausgebildet ist, durch welche der Glasrohrstrang von oben in den Walzenspalt zur Umformung einläuft.

Während der Umformung des Glasrohrstrangs im Walzenspalt wird die Lage von bevorzugt beiden Quetschwalzen 1 gemeinsam durch permanentes axiales Verstellen der Lage der Quetschwalzen so verändert, dass eine Kontaktfläche zwischen der jeweiligen Quetschwalze und dem heißen Glaskörper permanent variiert wird bzw. sich ändert. Bevorzugt erfolgt dieses permanente axiale Verstellen der Lage der Quetschwalzen entsprechend einer vorbestimmten Bewegungsfunktion. Bei dieser Bewegungsfunktion handelt es sich bevorzugt um eine zyklische Hin- und Herbewegung der jeweiligen Quetschwalze 1 in deren axialer Richtung entsprechend einer Sägezahn- oder Sinusfunktion oder einer vergleichbaren bevorzugt zeitlich stetig ausgeführten Bewegungsfunktion. Diese wird dabei in diskreten Schritten gleicher Schrittgröße ausgeführt.

Der präzise Aufbau der Anlage ermöglicht die mikrometergenaue Zustellung der beweglichen Quetschwalze gegen die feststehende Quetschwalze. Störungen im Bereich des Walzenspalts werden einerseits durch die Abdeckungen 46 und 47 reduziert und können andererseits mittels der Steuerung oder Regelung 88 minimiert werden, wie vorstehend anhand der Fig. 1 beschrieben. Insbesondere können die Temperatureinflüsse im Bereich des Walzenspalts messtechnisch über ein Pyrometer erfasst werden und der Walzvorgang entweder manuell oder automatisch ausgeregelt werden. Durch den Aufbau der Anlage ist die mikrometergenaue Manipulation des Innendurchmessers eines gequetschten Rohres in einer bisher nicht gekannten Genauigkeit (gemessen wurden beispielsweise ± 20 µm) möglich. Die Quetschwalzen können in Mikrograden lagegeregelt werden, sodass der jeweils geringste Spaltbreitenfehler der beiden Quetschwalzen ermittelt werden kann. Die gleichlaufgeregelten Rotationsachsen der Quetschwalzen können steuerungstechnisch mit einer Differenzgeschwindigkeit gefahren werden, um Krümmungseffekten, bedingt durch die Umlenkung des Glasstranges, vorzubeugen. Die Abzugsgeschwindigkeit wird durch die Ziehmaschine vorgegeben, die Walzgeschwindigkeit kann mit einer davon abweichenden Geschwindigkeit betrieben werden, um entweder einen Durchhang zu erzeugen oder einen Zug auf den Glasstrang auszuüben, welcher sich maßgeblich auf die Geometrie des gequetschten Rohres auswirkt. Der Steuer- und Regelkreis der Anlage wird aus einem optischen Messsystem, dass der Innendurchmesser des gequetschten Rohres mikrometergenau vermisst und den Präzisionsstellmotoren der jeweiligen Achsen (Rotationsachsen der Walzen, Zustellachsen) gebildet. Weiterhin wird das Walzenpaar über einen weiteren Stellmotor schrittweise verfahren, um einen vorzeitigen Verschleiß der Walzen, bedingt durch den hohen Temperatureinfluss des noch plastischen Glases zu minimieren.

Die Anlage und speziell die Quetschwalzen können luft- bzw. wassergekühlt werden, um die Temperatureinflüsse durch die am Einsatzort gegebenen Bedingungen zu minimieren.

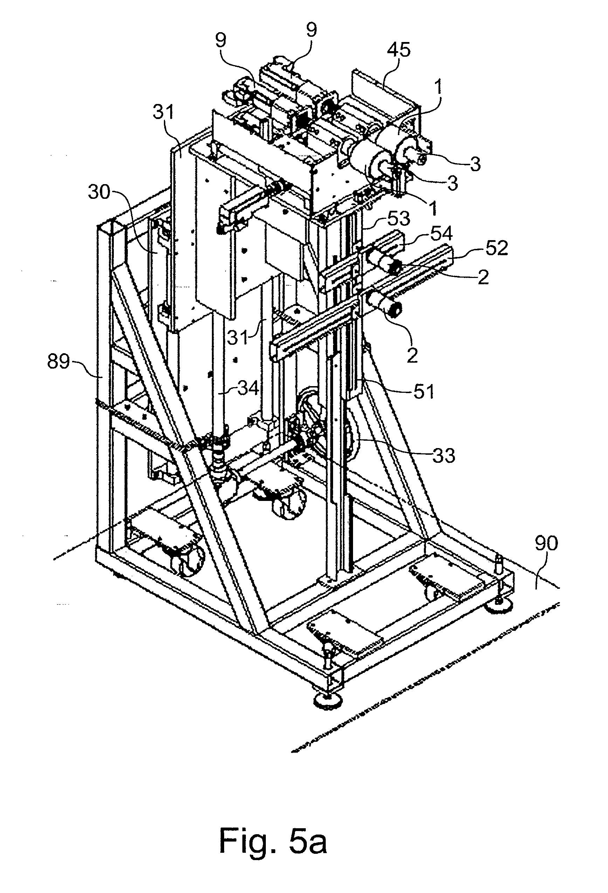

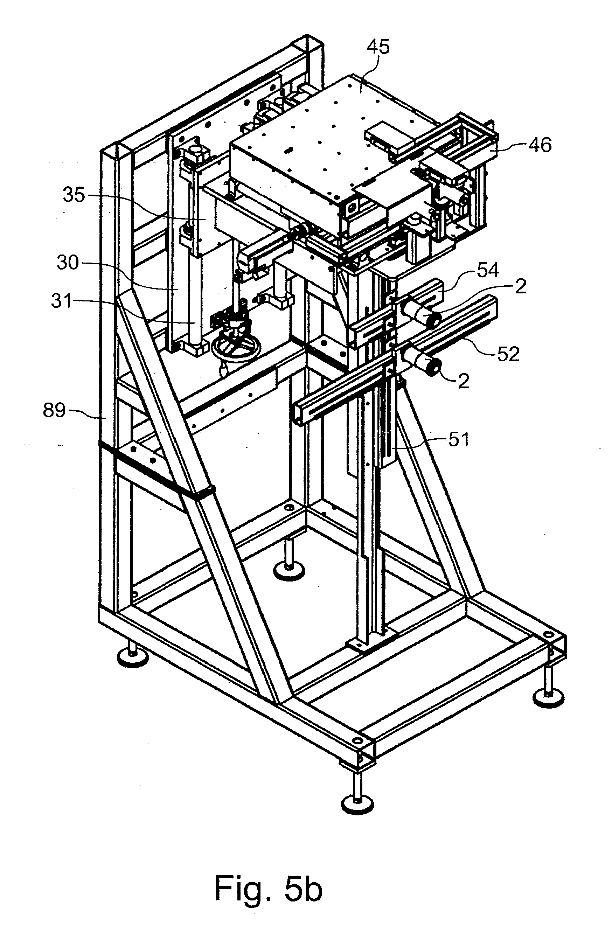

Die Figuren 5a und 5b zeigen zwei weitere Perspektivansichten einer Vorrichtung zur Umformung gemäß der vorliegenden Erfindung.

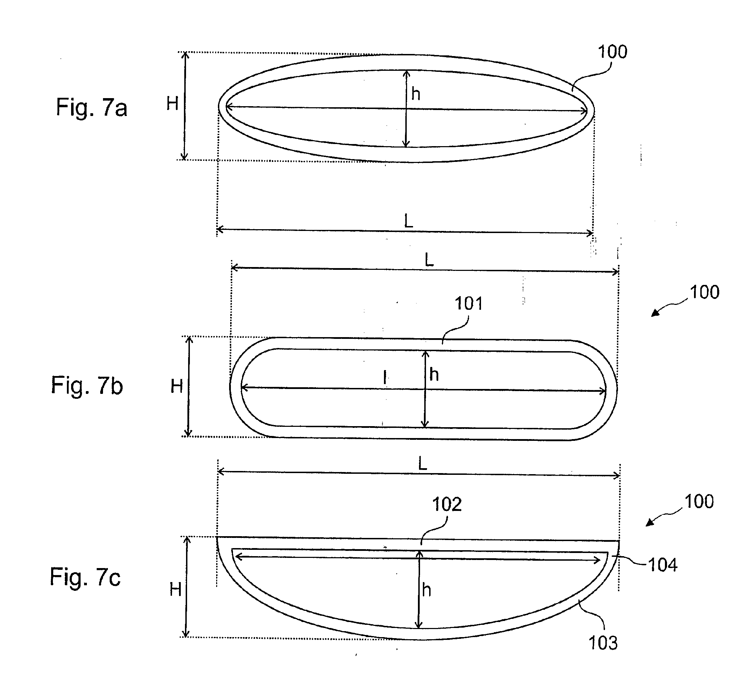

Die Figuren 7a bis 7c zeigen verschiedene Beispiele für Glasrohre mit nicht-kreisrundem Querschnitt, die nach der vorliegenden Erfindung mit hoher Präzision hergestellt werden können.

Gemäß der Fig. 7a ist ein Ovalrohr 100 ausgebildet, dessen Höhe H kleiner ist als die maximale Querabmessung L. Die lichte Weite in Richtung der kleinen Halbachse ist mit h bezeichnet. Die Wandstärke eines solchen Ovalrohrs kann über den gesamten Umfang konstant sein oder, so wie in der Fig. 7a dargestellt, stetig und spiegelsymmetrisch variieren. Ein solches Ovalrohr kann beispielsweise als Vorsatzfilter für LEDs von Flachbildschirmen verwendet werden. Eine um 30% höhere Lichtausbeute konnte festgestellt werden.

Gemäß der Fig. 7b ist das umgeformte Rohr 100 im Wesentlichen rechteckförmig, mit halbkreisförmig gerundeten Seitenkanten und zwei zueinander parallel verlaufenden Längsseiten 101 mit konstanter Wandstärke.

Gemäß der Fig. 7c weist das Glasrohr 100 eine plane Längsseite 102 sowie eine spiegelsymmetrisch und konvex gekrümmte Fläche 103 auf, wobei die Biegeradien in den beiden Eckbereichen 104 sehr klein sind.

Weitere Anwendungsgebiete solcher Glasrohre sind beispielsweise: Ovalrohre mit hoher geometrischer Genauigkeit für die Verwendung von hermetischen Verpackungen für Halbleiter-Nanopartikel, bei denen eine hohe geometrische Genauigkeit (Spaltmaß) wichtig ist; Kolben- bzw. Hüllrohre für Entladungslampen, insbesondere Blitzlampen bei denen das Einbaumaß, jedoch nicht die Lichtausbeute minimiert werden soll.

Bezugnehmend auf die Fig. 1 kann das Glasrohr entsprechend der stromabwärts des Walzenspalts mittels der Messgeräte 86, 87 erfassten Außenabmessung und/oder Innenabmessung markiert werden, beispielsweise durch Beschriften oder mittels Lasermarkieren. Weiterhin kann das Glasrohr entsprechend der stromabwärts des Walzenspalts mittels der Messgeräte 86, 87 erfassten Außenabmessung und/oder Innenabmessung auch sortiert werden.

Für eine Vorrichtung zum Quetschen von zähplastischem Glasrohr mit einer Innendurchmessertoleranz von +/- 20 µm liegen die Anforderungen an die Toleranzen der Komponenten im Allgemeinen bei einer 10-fachen Genauigkeit der Toleranzvorgabe. Um die Kosten noch in einem erträglichen Rahmen zu halten, wurden die Einzelkomponenten der Vorrichtung auf max. +/-3 µm toleriert. Zu beachten ist der Temperatureinfluss, da eine Temperaturänderung von 1K zu einer Spaltmaßänderung von 1 µm führt. Mittels eines Kühlsystems kann deshalb optional die Temperatur der Anlage möglichst konstant gehalten werden. Die Walzenoberflächen heizen sich aber durch den Glasstrang üblicherweise unkontrolliert auf, was durch die vorstehend beschriebene permanente axiale Verstellung von zumindest einer der Quetschwalzen und bevorzugt von beiden den Walzenspalt ausbildenden Quetschwalzen vermieden werden kann. Dies kann durch eine permanente Überwachung und Steuerung oder Regelung der Spaltbreite des Walzenspalts weiter unterstützt werden.

Wenngleich vorstehend beschrieben wurde, dass die Vorrichtung zur Umformung von Glasrohren eingesetzt wird, kann die Vorrichtung in entsprechender Weise auch zur Umformung von Glasstäben eingesetzt werden. Bevorzugt hat das Ausgangsglasrohr bzw. der Ausgangsglasstab einen kreisrunden Querschnitt und erfolgt dann die Umformung zu einem davon abweichenden Profil. Wie dem Fachmann beim Studium der vorstehenden Beschreibung ohne weiteres ersichtlich sein wird, wurde die Erfindung vorstehend nur in beispielhafter Weise und unter Bezugnahme auf Ausführungsbeispiele beschrieben und können zahlreiche Modifikationen vorgenommen werden, ohne von dem allgemeinen Lösungsgedanken und dem Schutzbereich der Erfindung, wie dieser durch die beigefügten Patentansprüche festgelegt ist, abzuweichen. Ferner können die vorstehend beschriebenen Merkmale erfindungsgemäß auch in anderer Weise als vorstehend konkret offenbart miteinander kombiniert werden.

## Patentansprüche

1. Verfahren zum Umformen eines länglichen Glaskörpers (81) in Form eines Glasrohrs oder Glasstabs mit einem Ausgangsprofil in einen länglichen Glaskörper mit einem anderen Profil, bei welchem Verfahren der längliche Glaskörper (81) in einem heißen, plastisch verformbaren Zustand einen Walzenspalt durchläuft, der von Quetschwalzen (1) ausgebildet wird und eine Spaltbreite aufweist, die kleiner ist als eine Außenabmessung des Ausgangsprofils, **dadurch gekennzeichnet, dass** die Lage von zumindest einer der Quetschwalzen durch permanentes axiales Verstellen der jeweiligen Quetschwalze entsprechend einer vorbestimmten, stetig ausgeführten Bewegungsfunktion so verändert wird, dass eine Kontaktfläche zwischen der jeweiligen Quetschwalze und dem heißen Glaskörper permanent variiert wird, wobei die vorbestimmte Bewegungsfunktion eine zyklische Hin- und Herbewegung der jeweiligen Quetschwalze in deren axialer Richtung ist.

2. Verfahren nach Anspruch 1, wobei die vorbestimmte Bewegungsfunktion in diskreten Schritten gleicher Schrittgröße ausgeführt wird.

3. Verfahren nach einem der vorhergehenden Ansprüche, wobei eine Drehbewegung der den Walzenspalt ausbildenden Quetschwalzen jeweils separat angetrieben wird.

4. Verfahren nach einem der vorhergehenden Ansprüche, wobei die Drehbewegung der den Walzenspalt ausbildenden Quetschwalzen jeweils synchron oder mit einem vorbestimmten konstanten Offset angetrieben wird.

5. Verfahren nach einem der vorhergehenden Ansprüche, wobei eine Außenabmessung und/oder Innenabmessung des anderen Profils stromabwärts des Walzenspalts erfasst wird und ein die Umformung des heißen, plastisch verformbaren Glaskörpers zu einem Glaskörper mit dem anderen Profil betreffender Parameter in Entsprechung zu der erfassten Außenabmessung und/oder Innenabmessung des anderen Profils gesteuert oder geregelt wird, um die Außenabmessung und/oder Innenabmessung des anderen Profils konstant zu halten.

6. Verfahren nach Anspruch 5, wobei der Parameter die Spaltbreite des Walzenspalts, eine jeweilige Drehzahl oder Drehzahldifferenz der den Walzenspalt ausbildenden Quetschwalzen oder ein an einen Innenraum des als Glasrohr ausgebildeten plastisch verformbaren Glaskörpers angelegter Überdruck ist.

7. Verfahren nach Anspruch 5 oder 6, wobei der Glaskörper entsprechend der stromabwärts des Walzenspalts erfassten Außenabmessung und/oder Innenabmessung markiert und/oder sortiert wird.

8. Verfahren zum Herstellen eines länglichen Glaskörpers in Form eines Glasrohrs oder Glasstabs, bei welchem Verfahren der längliche Glaskörper aus einer Glasschmelze zu einem Glasrohr oder Glasstab mit einem Ausgangsprofil abgezogen wird und das Glasrohr oder der Glasstab mittels eines Verfahrens nach einem der vorhergehenden Ansprüche in einem heißen, plastisch verformbaren Zustand zu einem Glasrohr oder Glasstab mit einem anderen Profil umgeformt wird.

9. Vorrichtung zum Umformen eines länglichen Glaskörpers (81) in Form eines Glasrohrs oder Glasstabs mit einem Ausgangsprofil in einen länglichen Glaskörper mit einem anderen Profil, mit Quetschwalzen (1), die einen Walzenspalt mit einer Spaltbreite ausbilden, die kleiner ist als eine Außenabmessung des Ausgangsprofils, und einer Fördereinrichtung (82-84), um den länglichen Glaskörper mit dem Ausgangsprofil durch den Walzenspalt zu fördern, **dadurch gekennzeichnet, dass** die Quetschwalzen (1) so gelagert und verstellbar sind, dass die Lage von zumindest einer der Quetschwalzen durch permanentes axiales Verstellen der jeweiligen Quetschwalze entsprechend einer vorbestimmten, stetig ausgeführten Bewegungsfunktion so verändert wird, dass eine Kontaktfläche zwischen der jeweiligen Quetschwalze und dem heißen Glaskörper permanent variiert wird, wobei die vorbestimmte Bewegungsfunktion eine zyklische Hin- und Herbewegung der jeweiligen Quetschwalze in deren axialer Richtung ist.

10. Vorrichtung nach Anspruch 9, wobei die den Quetschwalzen (1) zugeordnete Verstelleinrichtung (25) so ausgelegt oder gesteuert ist, dass die vorbestimmte Bewegungsfunktion in diskreten Schritten gleicher Schrittgröße ausgeführt wird.

11. Vorrichtung nach Anspruch 9 oder 10, wobei die Verstelleinrichtung einen Verschiebetisch (12) und einen Verstellmotor (25) zum Verstellen des Verschiebetisches umfasst, wobei die Quetschwalzen (1) auf dem Verschiebetisch (12) gelagert sind, der Verschiebetisch (12) in Axialrichtung der Quetschwalzen (1) verschieblich gelagert ist und der Verstellmotor mit dem Verschiebetisch gekoppelt ist, um das axiale Verstellen der zumindest einen Quetschwalze durch Verschieben des Verschiebetisches (12) zu bewirken.

12. Vorrichtung nach einem der Ansprüche 9 bis 11, weiterhin umfassend zumindest einen Antriebsmotor (9), der den den Walzenspalt ausbildenden Quetschwalzen zugeordnet ist, um eine Drehbewegung dieser Quetschwalzen separat anzutreiben, wobei der zumindest eine Antriebsmotor (9) so ausgelegt oder gesteuert ist, dass die den Walzenspalt ausbildenden Quetschwalzen jeweils synchron oder mit einem vorbestimmten konstanten Offset angetrieben werden.

13. Vorrichtung zum Herstellen eines länglichen Glaskörpers in Form eines Glasrohrs oder Glasstabs, mit
einer Anlage zum Ziehen des länglichen Glaskörpers (81) aus einer Glasschmelze zu einem Glasrohr oder Glasstab mit einem Ausgangsprofil; und
einer Vorrichtung nach einem der Ansprüche 9 bis 12 zum Umformen des länglichen Glaskörpers (81) mit dem Ausgangsprofil in einem heißen, plastisch verformbaren Zustand in einen länglichen Glaskörper mit einem anderen Profil.

## Claims

1. A method for shaping an elongated glass body (81), which is a glass tube or glass rod and has an initial profile, to an elongated glass body having a different profile, in which method the elongated glass body (81) passes, in a hot malleable state, through a nip, which is formed by squeezing rollers (1) and has a nip width which is less than an outer dimension of the initial profile, wherein the position of at least one of the squeezing rollers is varied continuously by a continuous axial adjustment of the respective squeezing roller according to a predetermined movement function so that a contact area between the respective squeezing roller and the hot glass body is varied continuously, wherein the predetermined movement function is a cyclic reciprocating movement of the respective squeezing roller in the axial direction thereof.

2. The method according to claim 1, wherein the predetermined function, wherein the predetermined function is carried out in discrete steps with the same step size.

3. The method according to any of the preceding claims, wherein a respective rotational movement of the squeezing rollers forming the nip is driven separately.

4. The method according to any of the preceding claims, wherein the rotational movement of the squeezing rollers forming the nip is driven in synchronism or with a predetermined constant offset.

5. The method according to any of the preceding claims, wherein an outer dimension and/or internal dimension of said different profile is detected downstream of the nip and a parameter relevant for the shaping of the hot, malleable glass body to a glass body having said different profile is controlled or regulated correspondence with the detected outer dimension and/or internal dimension of said different profile to maintain the outer dimension and/or internal dimension of said different profile constant.

6. The method according to claim 5, wherein said parameter is the width of said nip, a respective rotational speed or differential rotational speed of the squeezing rollers forming the nip or an over-pressure to be applied to an inner volume of said malleable glass body, if embodied as a glass tube.

7. The method according to claim 5 or 6, wherein the glass body is marked and/or sorted out according to the outer dimension and/or internal dimension detected downstream of said nip.

8. A method for producing an elongated glass body embodied as a glass tube or glass rod, in which method the elongated glass body is drawn from a glass melt to a glass tube or glass rod having an initial profile, and said glass tube or glass rod is shaped in a hot, malleable state to a glass tube or glass rod having a different profile by means of a method according to any of the preceding claims.

9. An apparatus for shaping an elongated glass body (81), which is a glass tube or glass rod and has an initial profile, to an elongated glass body having a different profile, comprising squeezing rollers (1), which form a nip of a width which is less than an outer dimension of the initial profile, and conveying means (82-84) for conveying the elongated glass body having said initial profile through said nip, **characterized in that** said squeezing rollers (1) are supported and adjustable such that the position of at least one of the squeezing rollers is varied continuously by a continuous axial adjustment of the respective squeezing roller according to a predetermined movement function so that a contact area between the respective squeezing roller and the hot glass body is varied continuously, wherein the predetermined movement function is a cyclic reciprocating movement of the respective squeezing roller in the axial direction thereof.

10. The apparatus according to claim 9, wherein the adjusting device (25) associated to the squeezing rollers (1) is configured or controlled such that the predetermined movement function is carried out in discrete steps with the same step size.

11. The apparatus according to claim 9 or 10, wherein the adjusting device comprises a translation stage (12) and an adjusting motor (25) for adjusting said translation stage, wherein the squeezing rollers (1) are supported on the translation stage (12), the translation stage (12) is mounted so as to be displaceable in axial direction of the squeezing rollers (1) and the adjusting motor is coupled to the translation stage to effect said axial adjustment of the at least one squeezing roller by adjusting said translation stage (12).

12. The apparatus according to any of claims 9 to 11, further comprising at least one drive motor (9) associated with the squeezing rollers forming said nip for separately driving a rotational movement of the squeezing rollers, wherein said at least one drive motor (9) is configured or controlled such that said squeezing rollers forming said nip are driven in synchronism or with a predetermined constant offset.

13. An apparatus for producing an elongated glass body in the form of a glass tube or glass rod, comprising
a device for drawing the elongated glass body (81) from molten glass to a glass tube or glass rod having an initial profile; and
an apparatus according to any of claims 9 to 12 for shaping the elongated glass body (81) having said initial profile in a hot malleable state to an elongated glass body having a different profile.

## Revendications

1. Un procédé de déformation d'un corps en verre allongé (81) sous la forme d'un tube de verre ou d'une tige de verre ayant un profil initial vers un corps en verre allongé de profil différent, dans lequel le corps en verre allongé (81) passe dans un état malléable chaud à travers un espacement délimitée par des rouleaux presseurs (1) et présente une largeur d'espacement qui est plus petite qu'une dimension extérieure du profile initial, dans lequel la position d'au moins l'un des rouleaux presseurs varie de manière continue au moyen d'un réglage axial continu du rouleau presseur respectif selon une fonction de déplacement prédéterminée de telle façon qu'une zone de contact entre le rouleau presseur respectif et le corps de verre chaud varie de manière continue, dans lequel la fonction de mouvement prédéterminée est un mouvement alternatif cyclique du rouleau presseur respectif suivant la direction axiale.

2. Le procédé selon la revendication 1, dans lequel la fonction prédéterminée est mise en oeuvre en étapes discrètes avec un pas constant.

3. Le procédé selon l'une quelconque des revendications précédentes, dans lequel un mouvement de rotation est appliqué séparément aux rouleaux presseurs délimitant l'espacement.

4. Le procédé selon l'une quelconque des revendications précédentes, dans lequel le mouvement de rotation des rouleaux presseurs formant l'espacement est appliqué de manière synchrone ou avec un décalage prédéterminé constant.

5. Le procédé selon l'une quelconque des revendications précédentes, dans lequel une dimension extérieure et/ou une dimension intérieure dudit profil différent sont détectés en aval de l'espacement et un paramètre relatif à la mise en forme du corps en verre malléable chaud en un corps en verre présentant ledit profile différent est contrôlé ou régulé en correspondance avec la dimension extérieure et/ou la dimension intérieure détectée pour maintenir constantes la dimension extérieure et/ou la dimension intérieure dudit profil différent.

6. Le procédé selon la revendication 5, dans lequel ledit paramètre est la largeur de l'espacement, une vitesse de rotation respective ou différentielle des rouleaux de pressage délimitant l'espacement ou une surpression devant être appliquée à un volume intérieure dudit corps en verre malléable, lorsque réalisé sous forme d'un tube de verre.

7. Le procédé selon la revendication 5 ou 6, dans lequel le corps en verre est marqué et/ou trié en fonction de la dimension extérieure et/ou intérieure détectée en aval dudit espacement.

8. Une méthode de fabrication d'un corps en verre allongée réalisé sous la forme d'un tube de verre ou d'une tige de verre, dans lequel le corps en verre allongé est tiré à partir d'une masse fondue de verre pour former un tube de verre ou une tige de verre présentant un profile initial, et ledit tube de verre ou ladite tige de verre étant déformée en un état malléable chaud correspondant à un tube de verre ou une tige de verre présentant un profil différent au moyen d'un procédé selon l'une quelconque des revendications précédentes.

9. Un appareil pour la formation d'un corps en verre allongé (81) sous la forme d'un tube de verre ou d'une tige de verre présentant un profil initial, vers un corps en verre allongé ayant un profil différent, comprenant des rouleaux presseurs (1), délimitant un espacement avec une largeur inférieure à une dimension extérieure du profil initial, et des moyens de transport (82-84) pour transporter le corps de verre allongé ayant ledit profil initial au travers ledit espacement, **caractérisé en ce que** lesdits rouleaux de pressage (1) sont supportés et réglables de telle manière que la position d'au moins un rouleau presseur peut varier de manière continue d'un réglage axial continu du rouleau de pressage respectif suivant une fonction de mouvement prédéterminée de façon à ce qu'une zone de contact entre le rouleau de pressage respectif et le corps en verre chaud varie de manière continue, dans lequel la fonction de mouvement prédéterminée est un mouvement alternatif cyclique. Du rouleau de pressage respectif suivant la direction axiale.

10. L'appareil selon la revendication 9, dans lequel le dispositif de réglage (25) associé aux rouleaux de pressage (1) est configuré ou commandé de telle manière que la fonction de mouvement prédéterminé est réalisée en étapes discrètes avec un pas constant.

11. L'appareil selon la revendication 9 ou 10, comprenant dans lequel le dispositif de réglage comporte un étage de translation (12) et un moteur de réglage (25) pour régler l'étage de translation, dans lequel les rouleaux presseurs (1) sont supportés sur l'étage de translation (12), l'étage de translation (12) étant monté pour être déplacé suivant la direction axial des rouleaux de pressage (1) et le moteur de réglage étant couplé à l'état de translation pour appliquer ledit réglage axial à au moins un des rouleaux de pressage au moyen de l'étage de translation (12).

12. L'appareil selon l'une quelconque des revendications 9 à 11, comprenant en outre au moins un moteur d'entraînement (9) associé aux rouleaux presseurs délimitant ledit espacement pour entraîner séparément un mouvement de rotation des rouleaux de pressage, dans lequel le ou lesdits moteur d'entraînement(s) est/sont configuré(s) ou commandé(s) de manière à ce que lesdits rouleaux de pressage délimitant ledit espacement sont commandés de manière synchrone ou avec un décalage prédéterminé constant.

13. Un appareil de fabrication d'un corps en verre allongé présentant la forme d'un tube de verre ou une tige de verre, comprenant :
un dispositif pour tirer le corps en verre allongé (81) à partir d'un verre fondu pour former un tube de verre ou une tige de verre présentant un profil initial ; et
un appareil selon l'une quelconque des revendications 9 à 12 pour la mise en forme du corps en verre allongé (81) présentant ledit profil initial vers un corps en verre allongé dans un état malléable chaude ayant un profil différent.
